# EUROPÄISCHE PATENTANMELDUNG

(11) **EP 4 425 751 A1**
(43) Veröffentlichungstag der Anmeldung: **04.09.2024**
(21) Anmeldenummer: 23159803.8
(22) Anmeldetag: 02.03.2023
(51) Int. Cl.: H02K 1/20, H01F 41/02, H02K 1/32, H02K 15/02

(54) **VERFAHREN ZUM PAKETIEREN VON BLECHTEILEN AUS EINEM ELEKTROBAND ODER -BLECH ZU EINEM BLECHPAKET**

(71) Anmelder: voestalpine Stahl GmbH, 4020 Linz (AT)
(72) Erfinder: Fluch, Ronald, 4020 Linz (AT)
(74) Vertreter: Jell, Friedrich

(57) **Zusammenfassung**

Es wird ein Verfahren zum Paketieren von Blechteilen (2) aus einem Elektroband oder-blech (5) zu einem Blechpaket (3) gezeigt. Um Leckagefreiheit zu schaffen, wird vorgeschlagen, dass derart aufeinandergestapelt wird, dass im Stapel (22) alle Blechteile (2) in Umfangsrichtung (U) des Stapels (22) drehwinkelversetzt zu ihren jeweils anschließenden Blechteil (2) oder anschließenden Blechteilen (2) angeordnet sind.

## Beschreibung

Die Erfindung betrifft eine Verfahren zum Paketieren von Blechteilen aus einem Elektroband oder -blech zu einem Blechpaket, bei dem die Blechteile, die auf beiden ihrer Flachseiten je eine, insbesondere thermohärtbare, Schmelzklebelackschicht, insbesondere Backlackschicht, vollflächig aufweisen, aufeinandergestapelt werden, und zwar derart, dass im Stapel der gestapelten Blechteile zumindest ein Blechteil in Umfangsrichtung des Stapels drehwinkelversetzt zu einem daran anschließenden anderen Blechteil angeordnet ist, und nachfolgend die gestapelten Blechteile anhand ihrer Schmelzklebelackschichten vollflächig miteinander zu einem Blechpaket verklebt werden.

Eine reduzierte Baugröße samt erhöhter Leistungsdichte bei laminierten Blechpaketen bedarf einer Kühlung mit Kühlflüssigkeit, beispielsweise auch mithilfe von Kühlkanälen durch das Blechpaket und/oder durch dessen Umströmung - was eine Spaltfreiheit zwischen den Lagen mit je einem einzelnen Blechteil oder mit mehreren nebeneinander angeordneten Blechteilen fordert. Hierfür ist es beispielsweise bekannt, gestapelte Blechteile mit einer Schmelzklebelackschicht zwischen den Lagen miteinander zu verkleben. Dennoch können aufgrund von Parameterschwankungen im Paketierverfahren zur Herstellung des Blechpakets unerwünschte Beeinträchtigungen der Eigenschaften an der Schmelzklebelackschicht oder durch andere negative Einflussfaktoren, eine Spaltbildung zwischen den Lagen nicht sicher ausgeschlossen werden - insbesondere dann nicht, wenn ein hoher Flüssigkeitsdruck am Blechpaket anliegt. Derartige Blechpakete sind daher im Hochleistungsbereich mit intensiver Kühlungsanforderung oftmals nicht verwendbar.

Zum Ausgleich von geometrischen Abweichungen am Blechpaket ist es zudem bekannt, Stapelabschnitte mit mehreren gestapelten Blechteilen gegenüber anderen Blechteilen in Umfangsrichtung des Stapels drehwinkelversetzt anzuordnen.

Es ist daher die Aufgabe der Erfindung, ein Blechpaket der eingangs geschilderten Art derart konstruktiv zu verändern, dass dieses standfest einer Flüssigkeitskühlung selbst mit hohem hydraulischen Druck unterworfen werden kann und damit universal einsetzbar ist.

Die Erfindung löst die gestellte Aufgabe durch die Merkmale des Anspruchs 1.

Indem erfindungsgemäß derart aufeinandergestapelt wird, dass im Stapel alle Blechteile in Umfangsrichtung des Stapels drehwinkelversetzt zu ihren jeweils anschließenden Blechteil oder anschließenden Blechteilen angeordnet sind, konnte überraschend die Standfestigkeit des Blechpakets gegenüber einem Flüssigkeitsdurchtritt zwischen dessen Lagen deutlich erhöht werden. Durch den Winkelversatz kann nämlich eine größere Spaltbildung zwischen den aneinander anschließenden Schmelzklebelackschichten unterbrochen werden - dies vermutlich dadurch, dass jene in den meisten Fällen parallel verlaufenden Welligkeiten der aneinander angrenzenden Schmelzklebelackschichten durch den Winkelversatz in Verschneidung gebracht werden können. Durchgehende Spalte können so vermieden - was bei damit spaltfreien Blechpaketen dafür sorgen kann, dass diese hohen hydraulischen Drücken standgehalten können, wie dies beispielsweise bei einer Innenkühlung eines Stator- und/oder Rotorblechpakets im Hochleistungsbereich erforderlich ist.

Auch bedarf es für diesen Verfahrensschritt keine aufwendigen Handhabungsschritte, was so zu einer reproduzierbaren Herstellung von leckagefreien Blechpakete führen kann.

Das erfindungsgemäße Blechpaket ist daher nicht nur robust auch bei hohen Hydraulikdrücken verwendbar, sondern auch kostengünstig und reproduzierbar herstellbar.

Ein Drehwinkelversatz in Umfangsrichtung des Stapels kann handhabungsfreundlich erfolgen, indem für den Drehwinkelversatz im Stapel das auf einem anderen Blechteil zu stapelnde Blechteil in Umfangsrichtung des Stapels gedreht wird.

Auch ist alternativ oder zusätzlich hierzu vorstellbar, dass der Stapel um seine Umfangsrichtung gedreht wird.

Vorzugsweise wird für den Drehwinkelversatz jeweils ein Drehwinkel φ im Bereich von 20 bis 160 Grad vorgenommen, um damit zuverlässig parallele Welligkeiten unterbrechen zu können.

Dies insbesondere dann, wenn der Drehwinkel φ 90 Grad beträgt.

Ein Drehwinkelversatz kann unabhängiger vom Verfahren gewählt werden, wenn die gestapelten Blechteile bezogen auf eine durch die Mitte des Stapels verlaufende Längsachse achsensymmetrisch ausgebildet sind.

Vorzugsweise befinden sich die Schmelzklebelackschichten der zu stapelnden Blechteile im B-Zustand, was die Paketierung von leckagefreien Blechpaketen weiter erleichtern kann.

Wenn jedes Blechteil auf seinen beiden einander gegenüberliegenden Flachseiten Schmelzklebelackschichten mit voneinander unterschiedlichen Martenshärten aufweisen, kann dieser Härteunterschied weiter dazu beitragen, dass Welligkeiten an Grenzflächen zwischen den Schmelzklebelackschichten ausgeglichen werden. Die Leckagefreiheit des Blechpakets kann damit weiter verbessert werden.

Die Martenshärte HM wird nach DIN EN ISO 14577 mit einem Krafteindringtiefenverfahren bei einer Maximalkraft Fₘₐₓ (Tiefenhärte) bestimmt. Ein pyramidenförmiger Eindringkörper mit quadratischer Grundfläche (Vickers Indenter) wird mit konstanter Krafterhöhung in die Prüfkörperoberfläche eingedrückt. Eindrückkraft und Eindringtiefe werden gemessen und daraus die Martenshärte berechnet. Die Eindrückkraft wird bis zu einer bestimmten maximalen Kraft Fₘₐₓ innerhalb einer vorgegebenen Zeitdauer in Sekunden in Form einer ansteigenden Kraftrampe erhöht. Die Maximalkraft Fₘₐₓ wird nach der Bückle-Regel ermittelt, wonach die maximale Eindringtiefe des Eindringkörper nicht mehr als 10% der Schichtdicke betragen darf. Aus mindestens fünf Messungen an verschiedenen Punkten der Oberfläche wird eine Mittelwertkurve gebildet, daraus die Kennwerte und Standardabweichung berechnet.

Vorzugsweise werden die Blechteile derart gestapelt, dass die sich zwischen zwei aneinander anschließenden Blechteilen befindlichen Schmelzklebelackschichten voneinander unterschiedliche Martenshärten aufweisen. Damit liegt stets eine weichere Schmelzklebelackschicht an einer härteren Schmelzklebelackschicht an, was eine spaltfreie Grenzfläche standfester ermöglichen kann.

Vorzugsweise weist die Schmelzklebelackschicht auf der ersten Flachseite jedes Blechteils eine Martenshärte HM im Bereich von 50 bis 700 MPa auf. Vorzugsweise weist die Schmelzklebelackschicht auf der ersten Flachseite jedes Blechteils eine Martenshärte HM im Bereich von 100 bis 500 MPa auf.

Vorzugsweise weist die Schmelzklebelackschicht auf der zweiten Flachseite jedes Blechteils eine Martenshärte HM im Bereich von 50 bis 700 MPa auf. Vorzugsweise weist die Schmelzklebelackschicht auf der zweiten Flachseite jedes Blechteils eine Martenshärte HM im Bereich von 100 bis 500 MPa auf.

Spaltfreiheit an den Grenzflächen kann standfester garantiert werden, wenn sich die Martenshärten HM der Schmelzklebelackschichten auf der ersten und zweiten Flachseite jedes Blechteils um zumindest 50 MPa unterscheiden. Vorzugsweise unterscheiden sich die Martenshärten der Schmelzklebelackschichten auf der ersten und zweiten Flachseite jedes Blechteils um zumindest 50 MPa.

Vorstehendes kann weiter verbessert werden, wenn beim unter Druck setzen zumindest der Schmelzklebelack mit der geringeren Martenshärte (HM) eine Temperatur größer, als seine Glasübergangstemperatur aufweist. Vorzugsweise weist hierzu die Schmelzklebelack mit der geringeren Martenshärte eine Temperatur im Bereich von 80 bis 220 °C auf.

Zudem kann zur Spaltfreiheit zwischen den einzelnen Lamellen beitragen, dass die aufeinander gestapelten Blechteile in Längsrichtung L des Stapels unter Druck gesetzt werden. Auch kann dieser Druck bei mit unterschiedlichen Martenshärten HM aneinanderlegenden Schmelzklebelackschichten Oberflächenwelligkeiten standfester ausgleichen. Vorzugsweise werden die gestapelten Blechteile in Längsrichtung L des Stapels unter Druck im Bereich von 0,5 bis 10 N/mm2 gesetzt. Vorzugsweise findet dieses unter Druck setzten, beim Verkleben der Blechteile statt.

Die Kühlung des Blechpakets kann verbessert werden, wenn die Blechteile eine Kanalaussparung aufweisen und werden diese derart aufeinandergestapelt werden, dass ihre Kanalaussparung einen sich im Blechpaket erstreckenden Kühlkanal begrenzen, der exzentrisch zu einer durch die Mitte des Blechpakets verlaufenden Längsachse des Blechpakets angeordnet ist.

Das Paketierverfahren kann in der Produktivität von leckagefreien Blechpaketen weiter erhöht werden, wenn ein Elektroband oder -blech mit den auf den beiden Flachseiten vollflächigen Schmelzklebelackschichten bereitgestellt wird, und nachfolgend vom Elektroband oder -blech die aufeinander zu stapelnden Blechteile vereinzelt werden.

In den Figuren ist beispielsweise der Erfindungsgegenstand anhand mehrerer Ausführungsvarianten näher dargestellt. Es zeigen
- Fig. 1: eine schematische Ansicht auf eine Vorrichtung zum Herstellen von Blechpaketen aus ersten oder zweiten Blechteilen,
- Fig. 2: eine vergrößerte Teilansicht auf die Vorrichtung nach Fig. 1,
- Fig. 3a: eine Draufsicht auf das oberste Blechteil eines nach Fig. 2 dargestellten Stapels nach einer Drehung durch einen Gegenhalter der Vorrichtung nach Fig. 1,
- Fig. 3b: eine Draufsicht auf den Stapel mit einem neuen vereinzelten Blechteil,
- Fig. 4a: eine Detailansicht der Fig. 3b und
- Fig. 4b: eine vergrößerte Schnittansicht nach I-II der Fig. 4a.

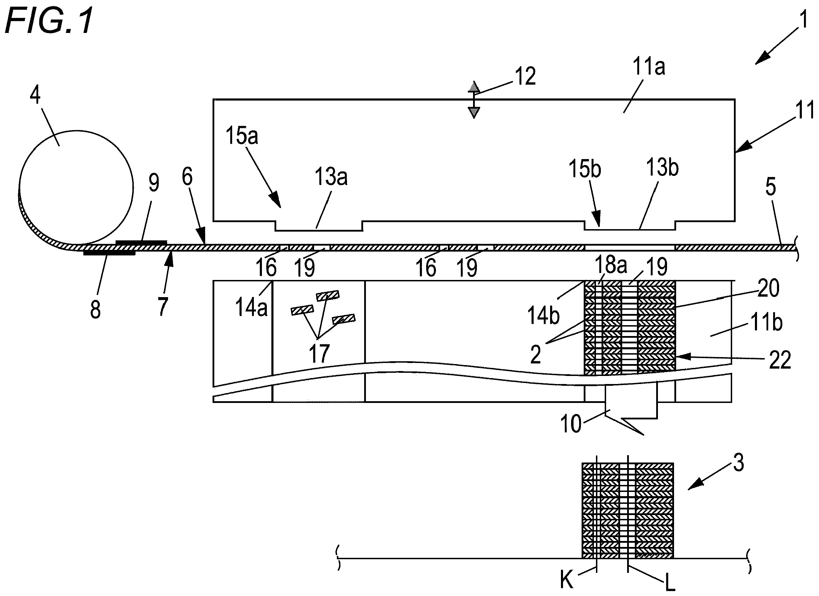

Gemäß dem Ausführungsbeispiel nach Fig. 1 wird eine Vorrichtung 1 zur Durchführung des erfindungsgemäßen Verfahrens schematisch dargestellt. Diese Vorrichtung 1 dient dem Paketieren von Blechpaketen 3 aus laminierten Blechteilen 2. Hierzu wird von einem Coil 4 ein Elektroband 5 (oder von einem Elektroblech im Falle eines Blechs) abgehaspelt, welches auf beiden Flachseiten 6 und 7 eine vollflächige - in Fig. 1 nur angedeutet dargestellte - Schmelzklebelackschicht 8, 9, nämlich Backlack, im B-Zustand aufweist. Deren Schichtdicke ist je 4 µm (Mikrometer). Das Elektroband 5 mit einer Güte NO25-13 Y420 weist eine Banddicke von 0,3 mm (Millimeter) auf.

Beispielsweise wird erwähnt, dass solch eine thermisch aktivierbare und damit heißhärtende Schmelzklebelackschicht (oftmals auch als Schmelzklebstoffschicht bezeichnet) unter der Bezeichnung "Backlack" bekannt ist. Beispielsweise kann der Schmelzklebelack eine Epoxidharzbasis aufweisen. Vorzugsweise handelt es sich beim Schmelzklebelack um ein Bisphenol-basiertes Epoxidharz-System mit einem Härter, beispielsweise mit einer Dicyandiamidbasis. Insbesondere kann es sich beim erwähnten Schmelzklebelack um ein Bisphenol-A-Epichlorhydrinharz-System mit Dicyanamid als Härter handeln. Dieses zweistufig aushärtende Epoxidharz-System befindet sich auf dem Blech oder Blechband im B-Zustand. Damit ist der teilvernetzte Schmelzklebelack reaktionsfähig. Durch Wärmezufuhr reagiert der sich im B-Zustand befindende Schmelzklebelack weiter und kann damit in den vollvernetzten C-Zustand übergeführt werden - was auch als Verbacken oder Endaushärten bezeichnet wird. Typischerweise hat diese teilvernetzte Schmelzklebelackschicht eine Dicke von einigen Mikrometern.

Vom klebstoffbeschichteten Elektroband 5 werden mithilfe eines Stanzwerkzeugs 11 - im Ausführungsbeispiel Folgestanzwerkzeug - mehrere Blechteile 2 vereinzelt, und zwar freigestanzt. Solch ein Freistanzen kann - im Allgemeinen erwähnt - ein Ausschneiden, Abschneiden, Ausklinken, Beschneiden, Zerteilen durch Ausdrücken etc. sein. Auch ist ein Lasertrennen vorstellbar, was aber nicht dargestellt ist.

Wie der Fig. 1 weiter zu entnehmen, führt das Stanzwerkzeug 11 ein Schneiden mit mehreren Hüben 12 durch. Hierzu wirken die Schneiden 13a, 13b im Oberwerkzeug 11a des Stanzwerkzeugs 11 mit den jeweiligen Matrizen 14a, 14b des Unterwerkzeugs 11b des Stanzwerkzeugs 11 zusammen und bilden damit im Stanzwerkzeug 11 zwei Stanzstufen 15a, 15b aus.

Mit der ersten Schneide 13a des Oberwerkzeugs 11a werden mehrere Kanalaussparungen 16 in das Elektroband 5 eingebracht, nämlich eingestanzt - was in Fig. 1 an den ausgestanzten Reststücken 17 zu erkennen ist. Die Kanalaussparungen 16 werden im Elektroband 5 für jedes vereinzelte Blechteil 2 vorgesehen, um damit mehrere Kühlkanäle 18a, 18b durch das gesamte Blechpaket 3 zu ermöglichen. Auch wird eine zentrische Aussparung 19 zur Aufnahme einer nicht näher dargestellten Rotorwelle eingebracht.

Mit der Schneide 13b wird das Blechteil 2 vom Elektroband 5 vereinzelt - dies mithilfe der Stanzstufe 15b, welche die Blechteile 2 freistanzt, durch Druck des Oberwerkzeugs 11a in eine Stapeleinrichtung 20 gedrängt und dort zu einem Stapel 22 gestapelt. Hierzu weist die Stapeleinrichtung 20 eine Führung im Unterwerkzeug 11b auf. Auch ist ein teilweise in Fig. 1 dargestellter Gegenhalter 10 in der Führung vorgesehen.

Die Stapeleinrichtung 20 wird aktiv beheizt, um die Backlackschicht der Blechteile 2 thermisch zu aktivieren und zwischen den Blechteilen 2 eine Klebstoffverbindung, also eine stoffschlüssige Verbindung herzustellen. Auf diese Weise wird der Schmelzkleblack 8 verbacken und damit vom B-Zustand in den C-Zustand übergeführt, was die Blechteile 2 zu einem Blechpaket 3 laminiert.

Die Kühlkanäle 18 sind je exzentrisch zu einer durch die Mitte des Blechpakets 3 verlaufenden Längsachse L des Blechpakets 3 angeordnet, und verlaufen damit nicht zentrisch durch das Blechpaket 3, wie in Fig. 1 zu erkennen. Die Längsachse L ist in den Ausführungsbeispielen die Mittellängsachse des Blechpakets 3, also eine durch die Mitte des Blechpakets 2 verlaufende Längsachse L. Im Ausführungsbeispiel ist diese Längsachse L beispielsweise auch eine Symmetrieachse des Blechpakets. Zentrisch durch das Blechpaket verläuft eine Aufnahme 21 im Blechpaket 3, da das Blechpaket 3 als Rotor für eine elektrische Maschine 100 verwendet wird und die Aufnahme 21 für eine Rotorwelle dient. Es ist aber auch vorstellbar, dass das Blechpaket 3 als Stator verwendet wird, und die Aufnahme 19 dazu vorgesehen ist, einen nicht dargestellten Rotor aufzunehmen.

Erfindungsgemäß werden im Stapel 22 alle Blechteile 2 in Umfangsrichtung U des Stapels 22 drehwinkelversetzt zu ihren jeweils anschließenden Blechteil 2 oder anschließenden Blechteilen 2 angeordnet. Dies wird dadurch erreicht, indem der Stapel 22 um einen 90 Grad Drehwinkel φ gedreht wird, bevor ein weiteres, vereinzeltes Blechteil 2 aufgebracht wird. Es ist aber auch vorstellbar, dass das auf die anderen Blechteile 2 neu zu stapelnde Blechteil 2 in dessen Umfangsrichtung U gedreht wird, was nicht näher dargestellt wurde.

Diese Drehung ist auch in Bezug auf die Kühlkanäle 18a, 18b unproblematisch, da die gestapelten Blechteile 2 bezogen auf eine durch die Mitte M des Stapels 21 verlaufende Längsachse L achsensymmetrisch ausgebildet sind. Damit fluchten auch nach eine Drehung des Stapels die Kanalaussparungen 16 mit den diesbezüglichen Kühlkanälen 18a, 18b.

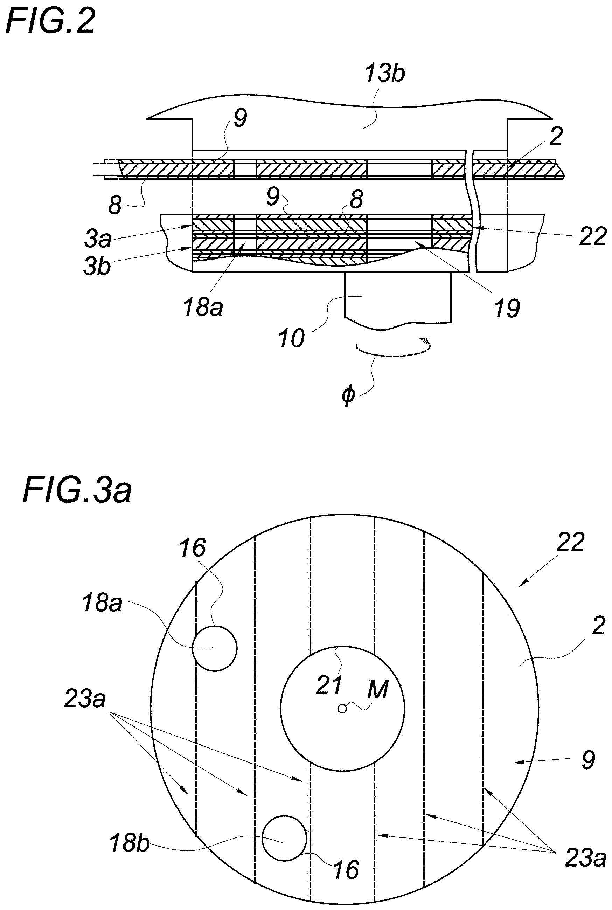

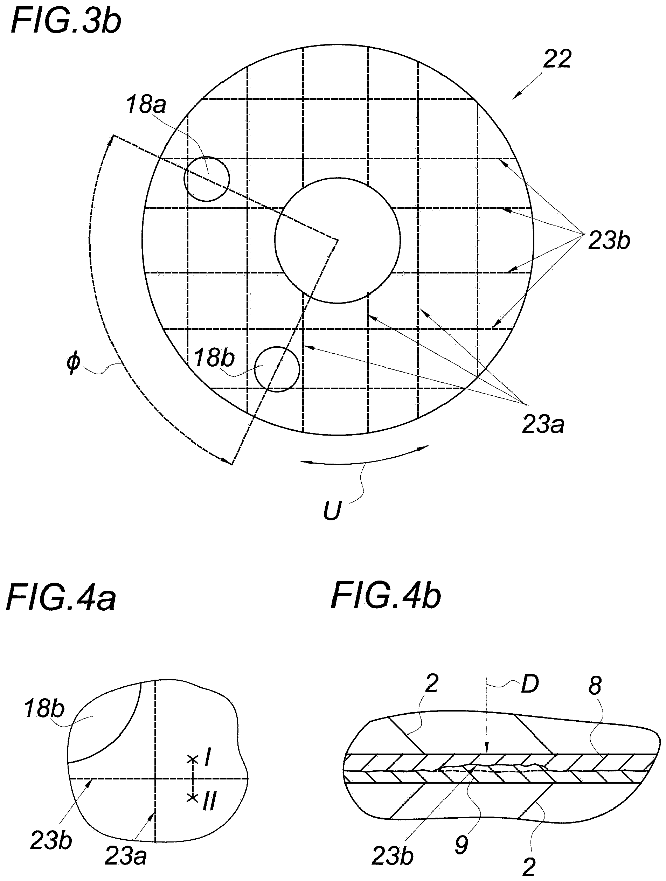

Dieser Winkelversatz aller Blechteile 2 des Stapels 22 führt dazu, dass, wie in Fig. 3b dargestellt, eine durchgehende Spaltbildung zwischen den beispielsweise nach Fig. 2 dargestellten Lagen 3a, 3b des Blechpakets 3 zuverlässig unterbrochen wird. Nach dem Winkelversatz kreuzen sich nämlich die an jedem Blechteil 2 nahezu parallel verlaufenden Wellentäler 23a, 23b der Oberflächenwelligkeit. Dies unterbricht die Wellentäler 23a, 23b durch Überlagerung deren Wellenfronten zuverlässig, wie dies nach Fig. 4a und 4b dargestellt ist.

Eine Leckage durch zwei aneinander angrenzenden Schmelzklebelackschichten kann damit nicht eintreten, sodass das erfindungsgemäße Blechpaket einer Flüssigkeitskühlung selbst mit hohem hydraulischen Druck standhalten kann.

Diese wird weiter verbessert, indem bei jedem Blechteil 2 die Schmelzklebelackschichten 8, 9 auf den gegenüberliegenden Fachseiten 6, 7 im Vergleich zueinander eine andere Martenshärte HM aufweisen.

So weist die Schmelzklebelackschicht 8 auf der Fachseiten 6 eine Martenshärte HM von 400 MPa (Megapascal) auf, wohingegen die Schmelzklebelackschicht 9 auf der gegenüberliegenden Fachseiten 7 eine Martenshärte HM von 300 MPa aufweist. Die Schmelzklebelackschichten 8, 9 auf der ersten und zweiten Flachseite 7, 8 unterscheiden sich daher in der Martenshärte HM um 100 MPa. Diese Martenshärten HM wurden nach DIN EN ISO 14577 mit einem Krafteindringtiefenverfahren mit Kraftrampe bestimmt. Als Messgerät wurde ein Fischerscope HM 2000 mit Vickers Indenter verwendet. Folgende Prüfparameter wurden verwendet:
Maximalkraft Fmax: 10 mN (Millinewton). Sowie kontinuierliche Erhöhung der Kraft auf diese Maximalkraft Fmax, d. h. zum Zeitpunkt 0 ist F = 0 mN und zum Zeitpunkt 20 s (Sekunden) wird als F die Maximalkraft Fmax = 10 mN erreicht.
Messdauer: 20 Sekunden.
Sowie wurde die Eindringtiefe bei 10% der Schichtdicke gewählt.

Die härtere Eigenschaft der Schmelzklebelackschicht 8 auf der Fachseiten 6 des Blechteils 2 wird beispielsweise durch Verwendung eines Reaktionsbeschleunigers erreicht. Beispielsweise in dem ein Reaktionsbeschleuniger auf diese Schmelzklebelackschicht 8, der in der Zusammensetzung gleichen Schmelzklebelackschichten 8, 9 aufgesprüht wird. Der Reaktionsbeschleuniger kann auch in der Schmelzklebelackschicht 8 enthalten sein, um denselben Effekt zu erzielen. Als Reaktionsbeschleuniger kann sich bei Backlack als Schmelzklebelackschicht 8 z. B. 2-Ethyl-4-methylimidazol auszeichnen.

Die Blechteile 2 werden nun derart gestapelt, dass die sich zwischen zwei aneinander anschließenden Blechteilen 2 befindlichen Schmelzklebelackschichten 8, 9 zueinander unterschiedlichen Martenshärten HM aufweisen.

Damit können eventuell verbliebenen Spalten zwischen den Lagen 3a, 3b zuverlässig geschlossen werden, in dem die weichere Schmelzklebelackschicht 9 in die Wellentäler 23a der härten Schmelzklebelackschicht 8 gedrängt wird.

Dies ist insbesondere dann äußerst effektiv, wenn der weichere Schmelzklebelack 9 auf eine Temperatur größer dessen Glasübergangstemperatur (Tg) erwärmt, nämlich auf 120 °C (Grad Celsius) erwärmt. Diese Erwärmung kann beispielsweise im Zuge des Verbackens der Blechteile stattfinden.

Zudem wirkt sich hierbei die Druckausübung auf den Stapel 22 in dessen Längsrichtung L vorteilhaft aus, die Unterbrechung der Wellentäler 23a, 23b sicherzustellen. Dieser ausgeübte Druck beträgt 2 N/mm² (Newton pro Quadratmillimeter), beispielsweise für 60 Sekunden.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zum Paketieren von Blechteilen (2) aus einem Elektroband oder
- blech (5) zu einem Blechpaket (3), bei dem
Blechteile (2), die auf beiden ihrer Flachseiten (6, 7) je eine, insbesondere thermohärtbare, Schmelzklebelackschicht (8, 9), insbesondere Backlackschicht, vollflächig aufweisen, aufeinandergestapelt werden, und zwar derart, dass im Stapel (22) der gestapelten Blechteile (2) zumindest ein Blechteil (2) in Umfangsrichtung des Stapels drehwinkelversetzt zu einem daran anschließenden anderen Blechteil (2) angeordnet ist,
und nachfolgend die gestapelten Blechteile (2) anhand ihrer Schmelzklebelackschichten (8, 9) vollflächig miteinander zum Blechpaket (3) verklebt werden,
**dadurch gekennzeichnet, dass**
derart aufeinandergestapelt wird, dass im Stapel (22) alle Blechteile (2) in Umfangsrichtung (U) des Stapels (22) drehwinkelversetzt zu ihren jeweils anschließenden Blechteil (2) oder anschließenden Blechteilen (2) angeordnet sind.

2. Verfahren nach Anspruch 1, **dadurch gekennzeichnet, dass** für den Drehwinkelversatz im Stapel (22) das auf einem anderen Blechteil (2) zu stapelnde Blechteil (2) in Umfangsrichtung (U) des Stapels (22) gedreht und/oder der Stapel (22) um seine Umfangsrichtung (U) gedreht wird.

3. Verfahren nach Anspruch 1 oder 2, **dadurch gekennzeichnet, dass** für den Drehwinkelversatz jeweils ein Drehwinkel (φ) im Bereich von 20 bis 160 Grad vorgenommen wird.

4. Verfahren nach Anspruch 3, **dadurch gekennzeichnet, dass** der Drehwinkel (φ) 90 Grad beträgt.

5. Verfahren nach einem der Ansprüche 1 bis 4, **dadurch gekennzeichnet, dass** die gestapelten Blechteile (2) bezogen auf eine durch die Mitte des Stapels (22) verlaufende Längsachse (L) achsensymmetrisch ausgebildet sind.

6. Verfahren nach einem der Ansprüche 1 bis 5, **dadurch gekennzeichnet, dass** sich die Schmelzklebelackschichten (8, 9) der zu stapelnden Blechteile (2) im B-Zustand befinden.

7. Verfahren nach einem der Ansprüche 1 bis 6, **dadurch gekennzeichnet, dass** jedes Blechteil (2) auf seinen beiden einander gegenüberliegenden Flachseiten (6, 7) Schmelzklebelackschichten (8, 9) mit voneinander unterschiedlichen Martenshärten (HM), bestimmt nach DIN EN ISO 14577 mit einem Krafteindringtiefenverfahren bei einer Maximalkraft Fmax (Tiefenhärte), aufweisen.

8. Verfahren nach Anspruch 7, **dadurch gekennzeichnet, dass** die Blechteile (2) derart gestapelt werden, dass die sich zwischen zwei aneinander anschließenden Blechteilen (2) befindlichen Schmelzklebelackschichten (8, 9) voneinander unterschiedliche Martenshärten (HM) aufweisen.

9. Verfahren nach Anspruch 7 oder 8, **dadurch gekennzeichnet, dass** die Schmelzklebelackschicht (8, 9) auf der ersten und/oder zweiten Flachseite (7, 8) jedes Blechteils (2) eine Martenshärte (HM) im Bereich von 50 bis 700 MPa, insbesondere von 100 bis 500 MPa, aufweist.

10. Verfahren nach Anspruch 7, 8 oder 9, **dadurch gekennzeichnet, dass** sich die Martenshärten (HM) der Schmelzklebelackschichten (8, 9) auf der ersten und zweiten Flachseite (7, 8) jedes Blechteils (3) um zumindest 20 MPa, insbesondere um zumindest 50 MPa, unterscheiden.

11. Verfahren nach einem der Ansprüche 1 bis 10, **dadurch gekennzeichnet, dass** die gestapelten Blechteile (2) in Längsrichtung L des Stapels (22) unter Druck (D) gesetzt werden.

12. Verfahren nach Anspruch 11, **dadurch gekennzeichnet, dass** beim unter Druck Setzen zumindest der Schmelzklebelack (8) mit der geringeren Martenshärte (HM) eine Temperatur größer als seine Glasübergangstemperatur (Tg), insbesondere im Bereich von 80 bis 220 °C, aufweist.

13. Verfahren nach Anspruch 11 oder 12, **dadurch gekennzeichnet, dass** die aufeinander gestapelten Blechteile (2) in Längsrichtung L des Stapels (22) beim Verkleben unter Druck (D), insbesondere im Bereich von 0,5 bis 10 N/mm², gesetzt werden.

14. Verfahren nach einem der Ansprüche 1 bis 13, **dadurch gekennzeichnet, dass** die Blechteile (2) je mindestens eine Kanalaussparung (16) aufweisen und derart aufeinandergestapelt werden, dass ihre Kanalaussparung (16) einen sich im Blechpaket (3) erstreckenden Kühlkanal (18a, 18b) begrenzen, der exzentrisch zu einer durch die Mitte (M) des Blechpakets (3) verlaufenden Längsachse (L) des Blechpakets (3) angeordnet ist.

15. Verfahren nach einem der Ansprüche 1 bis 14, **dadurch gekennzeichnet, dass** ein Elektroband oder -blech (5) mit den auf den beiden Flachseiten (7, 8) vollflächigen Schmelzklebelackschichten (8, 9) bereitgestellt wird, und nachfolgend vom Elektroband oder -blech (5) die aufeinander zu stapelnden Blechteile (2) vereinzelt werden.
